# EUROPÄISCHE PATENTSCHRIFT

(11) **EP 1 615 813 B1**
(45) Veröffentlichungstag und Bekanntmachung des Hinweises auf die Patenterteilung: **20.09.2006**
(21) Anmeldenummer: 04728774.3
(22) Anmeldetag: 22.04.2004
(51) Int. Cl.: B62B 3/06

(54) **GABELHUBWAGEN**
FORK-LIFT TRUCK
CHARIOT ELEVATEUR A FOURCHE

(30) Priorität: 23.04.2003 DE 10318458; 17.05.2003 DE 20307717 U
(43) Veröffentlichungstag der Anmeldung: 18.01.2006
(73) Patentinhaber: Borrmann GmbH, 47574 Goch-Nierswalde (DE)
(72) Erfinder: BORRMANN, Hans-Peter, 47574 Goch-Nierswalde (DE)
(74) Vertreter: Bergmann, Michael
(86) Internationale Anmeldenummer: PCT/EP2004/004249
(87) Internationale Veröffentlichungsnummer: WO 2004/094212

(56) Entgegenhaltungen:
- DE-A- 3 434 324
- GB-A- 2 121 759

## Beschreibung

Die Erfindung richtet sich auf einen Gabelhubwagen umfassend zwei auf einer Achse gelagerte Lenkräder mit daran angeordneter Hub- und Lenkeinrichtung und ein auf Laufrollen gelagertes Gabelträgergestell mit zwei Tragbalken, das mit der Hub- und Lenkeinrichtung in Wirkverbindung stehend gelagert ist, und einen im Bereich der vorderen Gabelenden der Tragbalken an dem Gabelträgergestell anordenbaren Radsatz. Weiterhin richtet sich die Erfindung auf eine Gabelhubwagenausstattung.

Gabelhubwagen werden benutzt, um Paletten und auf Paletten gelagerte Waren von einer Person von einem Ort zu einem anderen Ort fahren zu können. Dabei unterfährt der Gabelhubwagen mit seinen Gabeln bzw. Tragbalken die Palette, dann wird der Gabelhubwagen angehoben, wodurch die Palette vom Boden abgehoben wird, so dass der Wagen verfahren werden kann. Da heutzutage üblicherweise die so genannten Euro-Paletten Verwendung finden, sind die Gabelhubwagen in Bezug auf die Gabellängen und deren Abstand zueinander genormt ausgebildet. Dabei weisen die Gabeln bzw. Tragbalken eine solche Länge auf, dass bei in eine Palette eingefahrener Position des Gabelhubwagens die Enden der Gabeln bzw. Tragbalken nicht unter der Palette hervorstehen bzw. aus der Grundfläche der Palette herausstehen. Damit die Gabeln abgesenkt werden können und Paletten unterfahren werden können, sind die Gabelhubwagen zum einen mit einer hydraulischen Hebevorrichtung verbunden und weisen diese zum anderen üblicherweise zumindest unter den Gabeln bzw. Tragbalken relativ kleine Laufräder oder Laufrollen auf. Dies bedingt den Nachteil, dass die Gabelhubwagen auf unebenem oder holprigem Gelände nur schwer bewegt, d. h. verfahren werden können.

Um diesem Problem zu begegnen wird im Stand der Technik vorgeschlagen, einen Gabelhubwagen mit einem zusätzlichen Radsatz auszustatten, der an den Gabelenden bzw. Tragbalkenenden anbringbar ist. So ist ein gattungsgemäßer Gabelhubwagen aus der DE-A1-28 52 835 bekannt. Dieser Gabelhubwagen weist an einer Seite auf einer Achse gelagerte luftbereifte Lenkräder, die mit einer Hub- und Lenkeinrichtung in Wirkverbindung stehen, auf und ist an den demgegenüber gegenüberliegenden Enden der Tragbalken mit einem Ankopplungsmechanismus ausgestattet, der es erlaubt, dort einen ebenfalls luftbereifte Räder aufweisenden Radsatz anzubringen. Eine Weiterentwicklung dazu offenbart die DD-A1-270 697, die im Gegensatz zu dem Gabelhubwagen nach der DE 28 52 835 mit nur noch einer Hubeinrichtung auskommt. Einen Hubtransportwagen mit einem separat anbringbaren Radsatz offenbart auch noch die französische Patentschrift FR 1 550 367.

Bei all den zum Stand der Technik bekannten Gabelhubwagen handelt es sich um Sonderkonstruktionen oder spezielle Anfertigungen. Um die Radsätze anbringen zu können, müssen entweder Tragbalken bzw. Gabeln vorgesehen werden, die über die Palettengrundfläche überstehen, damit der Radsatz bequem angebracht werden kann, oder aber es muss in ganz unbequemer Weise der Radsatz bei in die Palette eingeschobenen Gabel- bzw. Tragbalkenenden angebracht werden, was zu einer unbequemen Handhabung eines solchen Gabelhubwagens führt. Vor Unterfahren der Palette können die größeren, den Gabelhubwagen "geländegängig" machenden zusätzlichen Räder des Radsatzes nicht montiert werden, da dann ein Unterfahren der Palette mit den Gabeln bzw. Tragbalken des Gabelhubwagens nicht möglich ist.

Auch ist es nicht möglich, Gabelhubwagen derart nachzurüsten, dass der zusätzliche Radsatz nur in gewünschten Einzelfällen montierbar ist, wobei in diesen Fällen dann die Gabelenden unter der Palette hervorstehen, wohingegen in allen übrigen Fällen bei der Nichtbenutzung des zusätzlichen Radsatzes die Gabelenden nicht aus der Palettenfläche hervorstehen.

Der Erfindung liegt demgegenüber die Aufgabe zugrunde, eine Lösung zu schaffen, die es ermöglicht, einen Gabelhubwagen gewünschtenfalls mit einem zusätzlichen Radsatz auszustatten, ohne seine Gebrauchsvorteile im Übrigen zu beeinträchtigen.

Bei einem Gabelhubwagen der eingangs bezeichneten Art wird diese Aufgabe erfindungsgemäß dadurch gelöst, dass der Gabelhubwagen auf die Tragbalken aufgeschobene und an dem Trägergestell lösbar befestigte, die Tragbalken verlängernde Übergreifschienen aufweist, an welchen stirnseitig der Radsatz lösbar anordenbar ist.

Eine Gabelhubwagenausstattung zeichnet sich erfindungsgemäß durch auf die Tragbalken des Gabelträgergestelles eines Gabelhubwagens aufschiebbare und an dem Gabelträgergestell lösbar befestigbare Übergreifschienen aus, die in ihrer auf die Tragbalken aufgeschobenen Position die Tragbalken verlängern, und einen stirnseitig an zwei Übergreifschienen in deren auf die Tragbalken aufgeschobener Position lösbar befestigbaren Radsatz aus.

Durch den erfindungsgemäßen Gabelhubwagen und die erfindungsgemäße Gabelhubwagenausstattung wird es ermöglicht, einen Gabelhubwagen standardmäßiger Bauart, der mit Gabeln oder Tragbalken ausgestattet ist, die beim Unterfahren einer Palette nicht aus der Palettenfläche hervorstehen, dennoch "geländegängig" zu machen. Ein solcher Gabelhubwagen wird mit einem den Gabelhubwagen "geländegängig" machenden, zusätzlichen Radsatz mit entsprechend großem Raddurchmesser dadurch ausgestattet, dass Übergreifschienen über die Gabeln bzw. Tragbalken des Gabelhubwagens übergeschoben und daran stirnseitig ein Radsatz befestigt wird. Hierbei verlängern die Übergreifschienen die Tragbalken, so dass deren Enden bei dann unter eine Palette gefahrenem Gabelhubwagen aus der Palettenfläche hervorstehen. In dieser Position lässt sich dann problemlos an den unter der Palettenfläche hervorstehenden Enden der Übergreifschienen stirnseitig der zusätzliche Radsatz anbringen. Die Gabelhubwagenausstattung hat darüber hinaus den Vorteil, dass mit ihr übliche, standardmäßige Gabelhubwagen auch nachgerüstet werden können.

Eine besonders gute und zweckmäßige Fixierung und Arretierung des Radsatzes an den Übergreifschienen lässt sich dadurch erreichen, dass die Übergreifschienen stirnseitige Öffnungen und unterseitige Öffnungen oder Anschlagsflächen aufweisen, die mit Arretierungsmitteln des Radsatzes lösbar in Verbindung bringbar sind, was die Erfindung in Ausgestaltung vorsieht.

Eine zweckmäßige Realisierung dieser Arretierungsmittel zeichnet sich gemäß Weiterbildung der Erfindung dadurch aus, dass die Übergreifschienen an ihren vorderen Enden jeweils eine mit einem Kupplungsbolzen des Radsatzes in Eingriff bringbare Kupplungsbohrung aufweisen. Dies kann weiterhin mit einer Ausgestaltung kombiniert sein, die sich dadurch auszeichnet, dass die Übergreifschienen vorne an der Unterseite jeweils eine mit einer Klinkennase des Radsatzes in Eingriff bringbare Eingriffsöffnung aufweisen.

Es ist gemäß Ausgestaltung der Erfindung aber auch möglich, dass die Übergreifschienen vorne an der Unterseite jeweils eine mit einer Klinkennase des Radsatzes in Anschlag bringbare Anschlagsfläche aufweisen.

Es kann weiterhin vorgesehen sein, dass die Übergreifschienen in etwa die Länge der Tragbalken aufweisen. Es ist gemäß Ausgestaltung der Erfindung aber auch möglich, dass die Übergreifschienen lediglich etwa die halbe Länge der Tragbalken aufweisen.

Zweckmäßigerweise sieht die Erfindung in Weiterbildung vor, dass der Gabelhubwagen zwei symmetrisch zur Mittelfläche zwischen den Tragbalken ausgebildete Übergreifschienen aufweist, die von vorn über die vorderen Bereiche zweier Tragbalken geschoben und auf diesen gegen unbeabsichtigtes Verschieben gesichert sind.

Für den Radsatz ist es zweckmäßig, wenn dieser auf einer Achse drehbeweglich angeordnete Laufräder mit einem den Durchmesser der Lenkräder entsprechenden Durchmesser aufweist. Dies bringt eine besondere Stabilität des mit dem Radsatz versehenen Gabelhubwagens mit sich, insbesondere ist die Ladefläche dann waagerecht ausgerichtet. Auf diese Weise gelangt man dann zu einem Gabelhubwagen, der ohne weiteres auch auf gepflasterten Flächen und unebenen Böden verfahrbar ist. Die Laufräder weisen einen solchen Durchmesser auf, dass Bodenunebenheiten oder auch auf dem Boden vor den Laufrädern liegende kleinere Steine nicht stören.

Für die Befestigung des Radsatzes sieht die Erfindung in vorteilhafter Weiterbildung vor, dass der Radsatz zwei Kupplungsbolzen mit einem dem Abstand der Mittelachsen der Tragbalken entsprechenden Abstand aufweist, welche Kupplungsbolzen mit den vorderen Enden der Übergreifschienen lösbar zu kuppeln sind.

In weiterer Ausgestaltung sieht die Erfindung vor, dass der Radsatz eine Achse aufweist, auf welcher ein zu der Achse parallel verlaufendes und auf der Achse drehbar angeordnetes Gestell angeordnet ist, welches eine Halteplatte und zwei in Längsrichtung der Achse voneinander distanzierte Bügel mit Abstand von der Halteplatte aufweist, wobei jeder Bügel einen fest angeordneten Kupplungsbolzen aufweist, mit dem der Radsatz an den vorderen Enden der Übergreifschienen lösbar ankuppelbar ist.

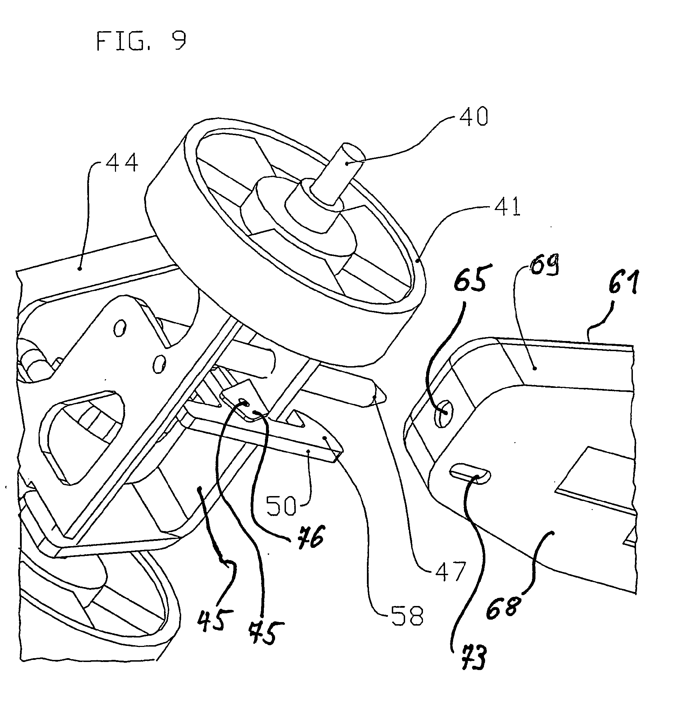

Um die mit den Übergreifschienen in Eingriff zu bringenden Klinken derart zu lagern, dass diese federkraftbeaufschlagt in ihre, beispielsweise in der Fig. 9 dargestellte, Ausgangs- und Arretierungslage (rück-)geführt werden, sieht die Erfindung in Ausgestaltung vor, dass der rückwärtige Teil der jeweils eine Nase aufweisenden Klinken an der Halteplatte federbelastet gelagert ist.

Einen besonderen Beitrag zur Stabilität des Gabelhubwagens bei angesetztem Radsatz ergibt sich dadurch, dass in erfindungsgemäßer Weiterbildung auf der Achse des Radsatzes drei Laufräder angeordnet sind.

Besonders zweckmäßig lässt sich die Erfindung bei Gabelhubwagen verwenden, bei denen im Bereich des vorderen Endes der Tragbalken je eine Laufrolle angeordnet ist, die jeweils mittels eines Gestänges bewegbar schwenkbeweglich gelagert ist, was die Erfindung ebenfalls vorsieht.

Schließlich lässt sich die Erfindung insbesondere vorteilhaft bei einem Gabelhubwagen anwenden, der sich dadurch auszeichnet, dass er eine auf der Achse zweier Lenkräder gelagerte Hubeinrichtung und ein auf zwei Laufrollen gelagertes Trägergestell mit zwei Tragbalken aufweist, welches mit der Hub- und Lenkeinrichtung beweglich verbunden ist, wobei die Hubeinrichtung eine Hubpumpe aufweist, die auf einer Konsole angeordnet ist, welche auf einer auf der Achse zwischen den zwei Lenkrädern gelagerten Stütze angeordnet ist, und wobei an der Hubpumpe eine Lenk- und Hubstange angeordnet ist und die Hubpumpe eine Kolbenstange aufweist, deren Kopf aus dem Gehäuse der Hubpumpe nach oben herausragt, und wobei am vorderen Ende der beiden Tragbalken je eine Laufrolle angeordnet ist und die Tragbalken am hinteren Ende über einen Querbalken miteinander verbunden sind sowie am hinteren Ende der Tragbalken ein Haltegestell mit einer Gelenkpfanne vorgesehen ist, die auf dem Kopf der Kolbenstange gelenkig gelagert ist und wobei an beiden Seiten der Konsole je ein zweiarmiges Gestänge angeordnet ist, dessen rückwärtige Arme mit der Konsole und dessen vordere Stangen mit der zugehörigen Laufrolle jeweils schwenkbeweglich verbunden sind.

Vorteilhafte und zweckmäßige Weiterbildungen und Ausgestaltungen der Gabelhubwagenausstattung ergeben sich aus den Ansprüchen 18 bis 29, wobei die damit verbundenen Vorteile den mit den entsprechenden Ausgestaltungen des Gabelhubwagens verbundenen Vorteilen entsprechen.

Die Erfindung ist nachstehend anhand der Zeichnung beispielhaft näher erläutert. Diese zeigt in
- Fig. 1: einen bekannten Gabelhubwagen in Seitenansicht,
- Fig. 2: einen Gabelhubwagen in Seitenansicht mit aufgeschobenen Übergreifschienen in seiner Palettenunterfahrposition,
- Fig. 3: einen Gabelhubwagen in Seitenansicht mit aufgeschobenen Übergreifschienen und angebrachtem Radsatz in seiner Palettentransportposition,
- Fig. 4: den Gabelhubwagen gemäß Fig. 1 in vergrößerter Darstellung,
- Fig. 5: einen Radsatz in perspektivischer Darstellung,
- Fig. 6: den Radsatz nach Fig. 5 mit Übergreifschienen in perspektivischer Darstellung,
- Fig. 7: den Radsatz nach Fig. 5 in an die Übergreifschienen angekuppelter Position in perspektivischer Darstellung,
- Fig. 8: den Radsatz nach Fig. 5 in an die Übergreifschienen angekuppelter Stellung in perspektivischer Darstellung,
- Fig. 9: eine vergrößerte Detailansicht des linken Teiles der Fig. 5 in perspektivischer Aufsicht von unten,
- Fig. 10: eine Detailansicht des linken Teils der Fig. 6 in perspektivischer Darstellung von unten,
- Fig. 11: eine Darstellung einer alternativen Ausführungsform einer erfindungsgemäßen Gabelhubwagenausstattung in perspektivischer Darstellung von unten und in
- Fig. 12: die Befestigungsanordnung der Ausführungsform nach Fig. 11 im rückwärtigen Bereich eines Gabelhubwagengestells.

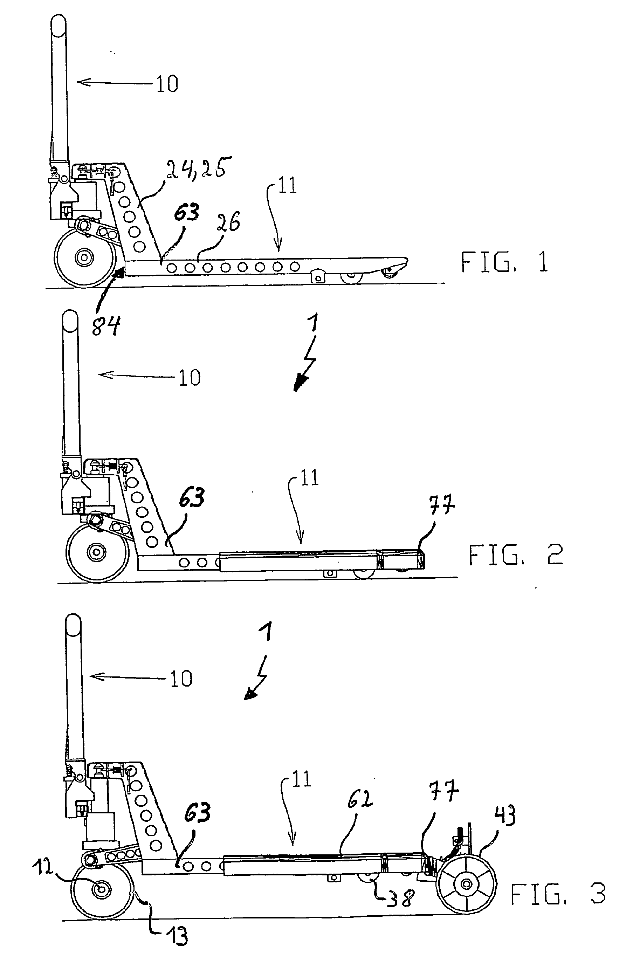

Der insgesamt mit 1 bezeichnete und in den Figuren 2 und 3 dargestellte, erfindungsgemäß ausgestattete Gabelhubwagen weist, wie dies insbesondere aus den Figuren 1 bis 4 ersichtlich ist, ein rückwärtiges Teil 10 und ein vorderes Teil 11 auf. Das rückwärtige Teil 10 ist mit dem vorderen Teil 11 gelenkig und drehbeweglich verbunden. Auf einer Achse 12 sind an deren beiden Enden Lenkräder 13, 14 vorgesehen, zwischen denen auf einer sich auf der Achse 12 abstützenden Stütze 15 auf einer Konsole 16 ein Pumpengehäuse 17 vorgesehen ist. In dem Pumpengehäuse 17 ist eine Kolbenstange 18 höhenverschieblich bewegbar gelagert. An der Konsole 16 ist mittels eines Schwenkgelenkes 19 eine Lenk- und Hubstange 20 mit einem Griff 21 in der Mittellängsebene schwenkbeweglich gelagert und auf einer Rückstellfeder 22 abgestützt. Auf dem kugelförmig ausgebildeten Kolbenstangenkopf der Kolbenstange 18 ist der obere Teil 23 des rückwärtigen Teiles des Gabelträgergestells 63 gelagert. An dem oberen Teil 23 sind zwei nach unten gerichtete Schrägbalken 24, 25 angeordnet, die mit einem Querbalken und zwei Tragbalken 26, 27 starr verbunden sind. An den beiden Schrägbalken 24, 25 ist in zwei Gelenken 28, 29 je ein Kniehebel 30, 31 gelenkig gelagert. Der Kniehebel ist über eine Hebelstange 32 in einem Gelenk 33 an der Stütze 15 gelenkig gelagert. Der Hebelarm 34 ist über ein Gelenk 35 mit einer Fahrstange 36 verbunden, die über ein Hebelgelenk 37 mit einer Laufrolle 38 verbunden ist. Die Schrägbalken 24, 25 bilden zusammen mit dem oberen Teil 23 des rückwärtigen Teiles des Gabelträgergestells 63 und dem Querbalken ein Haltegestell 39. Die Lenk- und Hubstange 20 bildet zusammen mit der das Pumpengehäuse 17 und die Kolbenstange 18 aufweisenden Hubpumpe und den drehbar an der Konsole 16 gelagerten Lenkrädern 13, 14 die Hub- und Lenkeinrichtung des Gabelhubwagens 1 aus.

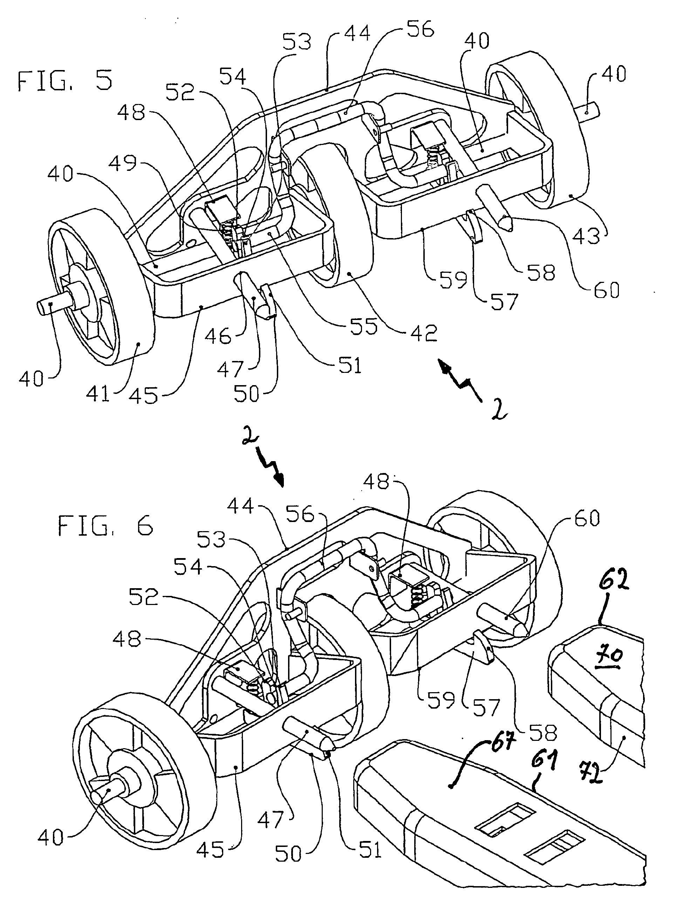

Der in Fig. 5 dargestellte, insgesamt mit dem Bezugszeichen 2 bezeichnete Radsatz weist auf einer Achse 40 drei Laufräder 41, 42, 43 auf. Auf der Achse 40 ist drehbar eine Halteplatte 44 angeordnet. An der Halteplatte 44 ist zwischen den Laufrädern 41 und 42 ein von der Achse abstehender Bügel 45 vorgesehen, der eine Bohrung 46 aufweist, durch die ein Kupplungsbolzen 47 tritt, der an der Halteplatte 44 befestigt ist. An der Halteplatte 44 ist ein Winkelblech 48 befestigt, an dem über eine Feder 49 eine Klinke 50 mit einer Nase 51 federbelastet schwenkbeweglich gelagert ist. Die Klinke 50 weist eine Gabel mit zwei Gabelenden 52 und 53 mit einem dazwischen liegenden Schlitz 54 auf. Zwischen den beiden Gabelenden 52, 53 ist in den Schlitz 54 ein Entriegelungsbügel 55 gelagert, der zu einem Handgriff 56 nach außen gebogen ist.

Zwischen den beiden Laufrädern 42 und 43 sind die Verhältnisse ebenso wie in den Bereich zwischen den Laufrädern 41 und 42, allerdings ist die Klinke 57 mit der Nase 58 deutlicher erkennbar als die Darstellung zwischen den Laufrädern 41 und 42. Die Klinke 57 liegt gegen den Bügel 59 an, durch den ein zweiter Kupplungsbolzen 60 hindurchtritt. Die aus den Figuren 5 und 6 ersichtliche Position der Klinken 50 und 57 stellt die Ruhe- bzw. Ausgangsposition und auch die Verriegelungsposition, in welcher die Nasen 51 und 58 in die Öffnungen 73 und 74 der Übergreifschienen 61 und 62 eingreifen, dar. In diese Positionen werden die Klinken 50 und 57 mit Hilfe von Federn 49 selbsttätig bewegt.

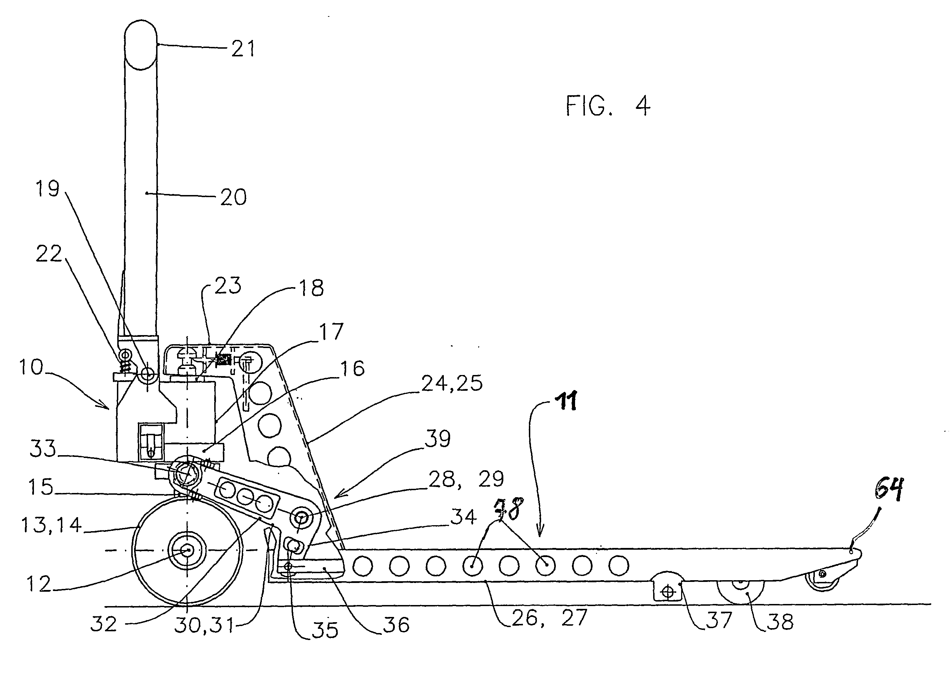

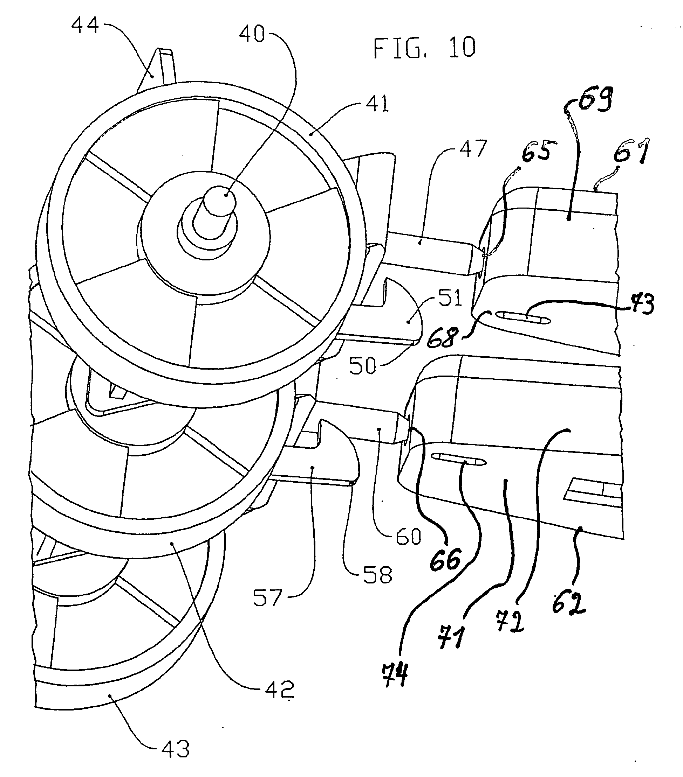

In der Fig. 6 ist der in Fig. 5 dargestellte und beschriebene Radsatz nochmals gezeigt, wobei in der Nähe des Radsatzes zwei Übergreifschienen 61 und 62 dargestellt sind. Die Übergreifschienen 61, 62 sind von vorne auf die Gabeln bzw. Tragbalken 26, 27 des Gabelhubwagens 1 aufgeschoben und verlängern diese in Richtung auf den in Fig. 6 dargestellten Radsatz zu. Sie stehen also über die in Fig. 4 mit dem Bezugszeichen 64 versehenen Enden der Tragbalken 26, 27 über. Wie sich aus den Figuren 6 bis 10 ergibt, sind die Übergreifschienen 61, 62 zumindest in ihrem dem Radsatz zugewandten Endbereich jeweils im Wesentlichen geschlossen mittels im Wesentlichen geschlossener Oberseitenfläche 67, 70, Unterseitenfläche 68, 71 und einer diese verbindenden Seitenrandfläche 69, 72 ausgebildet. Die Übergreifschienen 61, 62 sind somit quasi als Schuh auf die Tragbalken 26, 27 aufschiebbar. Die Mitten der Übergreifschienen 61 und 62 haben den gleichen Abstand voneinander wie die beiden Kupplungsbolzen 47 und 60. Die beiden Übergreifschienen 61 und 62 weisen vorn stirnseitig Kupplungsbohrungen 65, 66 zur Aufnahme der Kupplungsbolzen 47, 60 auf, wie dies insbesondere aus Fig. 10 ersichtlich ist.

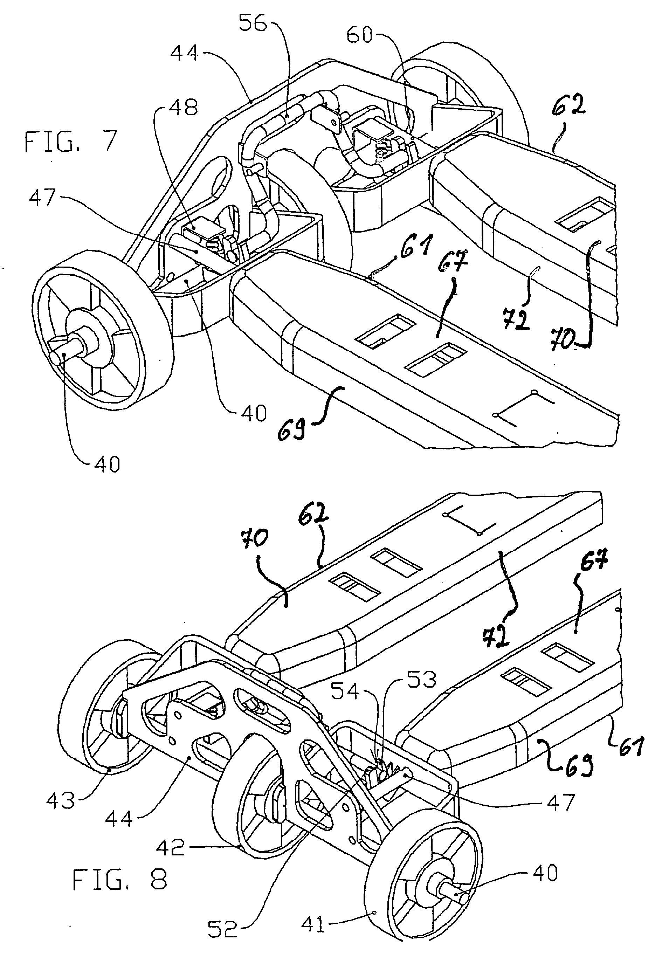

In Fig. 7 sind die beiden Übergreifschienen 61, 62 fest gegen die beiden Bügel 45, 59 gesetzt, so dass die Kupplungsbolzen 47, 60 in die Kupplungsbohrungen 65, 66 eingreifen und gleichzeitig die Klinken 50, 57 mit ihren Nasen 51, 58 jeweils in eine in den Unterseitenflächen 68, 71 der beiden Übergreifschienen 61, 62 ausgebildete Öffnungen 73, 74 eingreifen.

Der in Fig. 8 dargestellte Radsatz mit den beiden angekuppelten Übergreifschienen 61, 62 ist gegenüber der Darstellung gemäß Fig. 7 um etwa 90 ° gegen den Uhrzeigersinn geschwenkt.

In Fig. 9 ist der linke Teil der Fig. 5 vergrößert dargestellt. Es ist erkennbar, dass die Klinke 50 um eine Achse 75, die in einer an dem Bügel 45 befestigten Lasche 76 ausgebildet ist, gegen die Kraft der Feder 49 bewegt werden kann, wobei die Feder 49 die Klinke 50 bei fehlender Kraftbeaufschlagung von außen in die in Fig. 9 dargestellte Position bewegt. Analog ist die Klinke 57 an dem Bügel 59 befestigt und gelagert.

Ähnlich ist in Fig. 10 die Anordnung der Fig. 6 vergrößert und gedreht dargestellt. Hierdurch ist es möglich, die in den Übergreifschienen 61, 62 angeordnete Öffnungen 73, 74 zu erkennen, in die in der verriegelten Stellung die Klinken 50, 57 mit ihren Nasen 51, 58 einklinken bzw. einrasten. Die Klinken 50, 57 bilden zusammen mit den Kupplungsbolzen 47, 60 die Arretierungsmittel des Radsatzes aus.

Der Gabelhubwagen 1 besteht aus dem rückwärtigen Teil 10 und dem vorderen Teil 11, wobei das rückwärtige Teil 10 und das vordere Teil 11 lösbar miteinander verbunden sind. Das rückwärtige Teil 10 weist das Pumpengehäuse 17 auf, das als Zylinder ausgebildet ist und in dem die Kolbenstange 18 höhenverschieblich angeordnet ist. Das Pumpengehäuse 17 steht auf der Stütze 15, die auf der Achse 12 angeordnet ist, an deren beiden Enden je ein Lenkrad 13, 14 vorgesehen ist. Das Pumpengehäuse 17 ist auf der Konsole 16 gelagert, an der die Lenk- und Hubstange 20 in Längsrichtung des Gabelhubwagens 1 schwenkbeweglich angeordnet ist. An der Lenk- und Hubstange 20 ist ein durch die Rückstellfeder 22 belasteter Stift vorgesehen, der die Lenk- und Hubstange 20 in der senkrechten Stellung hält. An der Lenk- und Hubstange 20 ist ein Hebel vorgesehen, mit dem, wenn die Lenk- und Hubstange 20 in der Mittellängsebene des Gabelhubwagens 1 nach unten oder mehrere Male nach unten bewegt wird, Öl in das Pumpengehäuse 17 gefüllt wird, so dass die Kolbenstange 18 im Pumpengehäuse 17 sich senkrecht nach oben bewegt.

Der vordere Teil des Gabelhubwagens 1 weist zwei parallel zueinander ausgerichtete und horizontal verlaufende Tragbalken 26, 27 auf, die die Gabeln des Gabelhubwagens 1 ausbilden und an ihrem rückwärtigen Ende über einen Verbindungsbalken miteinander verbunden sind. Mit dem Verbindungsbalken und den beiden Tragbalken 26, 27 steht das Haltegestell 39 in Verbindung, das schräg nach oben gerichtet ist sowie oben eine sich nach unten öffnende Kalotte aufweist, mit der das Haltegestell 39 auf dem entsprechend kugelig geformten Kolbenstangenende aufliegt.

In der in der Fig. 2 gezeigten Stellung wird der Gabelhubwagen 1 unter eine Palette gefahren. Die von vorne auf die Tragbalken 26, 27 aufgeschobenen Übergreifschienen 61, 62 verlängern in dieser Stellung quasi die Tragbalken 26, 27 über ihre Tragbalkenenden 64 hinaus, so dass in unter einer Palette durchgefahrener Position die Enden 77 der Übergreifschienen 61, 62 aus der Palette hervorstehen.

Bei dem anschließenden Herausfahren der Kolbenstange 18 aus dem Pumpengehäuse 17 nach oben wird das Gabelträgergestell 63 mit den beiden Tragbalken 26, 27 nach oben angehoben, bis in etwa die in der Fig. 3 dargestellte Palettentransportposition - gegenüber der in Fig. 2 dargestellten Palettenunterfahrposition - erreicht ist . Zu diesem Zeitpunkt berühren aber noch die Laufrollen 38 den Fahrboden. In dieser Position kann dann der Radsatz an den Übergreifschienen angebracht werden. Die geschieht dadurch, dass die Kupplungsbolzen 47, 60 in die Kupplungsbohrung 65, 66 eingeführt und durchgeschoben werden, bis die Nasen 51, 58 der Klinken 50, 57 in die unterseitigen Öffnungen 73, 74 einrasten. Hierzu kann der Radsatz bequem an dem bügelförmig ausgebildeten Handgriff 56 ergriffen werden.

Zwischen dem rückwärtigen Teil 10 und dem vorderen Teil 11 des Gabelhubwagens 1 ist beidseitig je ein Kniehebel 30, 31 angeordnet, der mit je einer Fahrstange 36 innerhalb eines zugehörigen Tragbalkens 26, 27 verbunden ist. Die Fahrstange 36 ist so mit einer im vorderen Bereich des zugehörigen Tragbalkens 26, 27 angeordneten Laufrolle 38 verbunden, dass bei Anheben des Gabelträgergestells 63 mit den Tragbalken 26, 27 die Laufrolle 38 zunächst Bodenhaftung behält, bis sie ihre Endlage erreicht hat, und dann bei weiterem Anheben des Gabelträgergestells 63 die Bodenhaftung verliert, wie dies in Fig. 3 dargestellt ist. In dieser Stellung lässt sich der Gabelhubwagen 1 dann auf den gegenüber der Laufrolle 38 deutlich größere Durchmesser aufweisenden Lenkrollen 13, 14 und den Laufrädern 41 bis 43 des Radsatzes verfahren.

Die Übergreifschienen 61, 62 sind von vorne über die vorderen Bereiche der Tragbalken 26, 27 geschoben und auf den Tragbalken gegen unbeabsichtigtes Verschieben gesichert. Die Übergreifschienen können im Wesentlichen die Länge der Tragbalken 26, 27 aufweisen, sich aber auch lediglich über einen Teilbereich der Längserstreckung der Tragbalken, insbesondere deren halbe Länge, erstrecken. In den Figuren 2 und 3 erstrecken sich die Übergreifschienen 61, 62 über ca. Dreiviertel der Länge der Tragbalken 26, 27. Die Übergreifschienen können auf unterschiedlichste Art auf den Tragbalken 26, 27 gegen unbeabsichtigtes Herausziehen bzw. Abziehen gesichert werden. Denkbar ist beispielsweise ein Klappscharnier oder eine Klapplasche, die am dem Ende 77 gegenüberliegenden Ende an einer Seitenrandfläche 69, 72 der Übergreifschienen 61, 62 angeordnet und befestigt ist, und in seiner Verriegelungsstellung in ein in den Tragbalken 26, 27 ausgebildetes Lochmuster 78 eingreift.

Für besondere Zwecke können die Übergreifschienen 61, 62 in etwa die Länge der Tragbalken 26, 27 aufweisen und in ihrem rückwärtigen Bereich mit je einem L-förmigen Träger versehen sein. Dadurch können die Tragbalken - sofern sie vom Gabelträgergestell 63 lösbar sind - mit den vorderen Rädern des Radsatzes 2 als Sackkarre benutzt werden.

Die Übergreifschienen 61, 62 sind symmetrisch zur Mittefläche zwischen den Tragbalken 26, 27 angeordnet, von vorn über die vorderen Bereiche der Tragbalken 26, 27 geschoben und auf diesen gegen unbeabsichtigtes Verschieben gesichert.

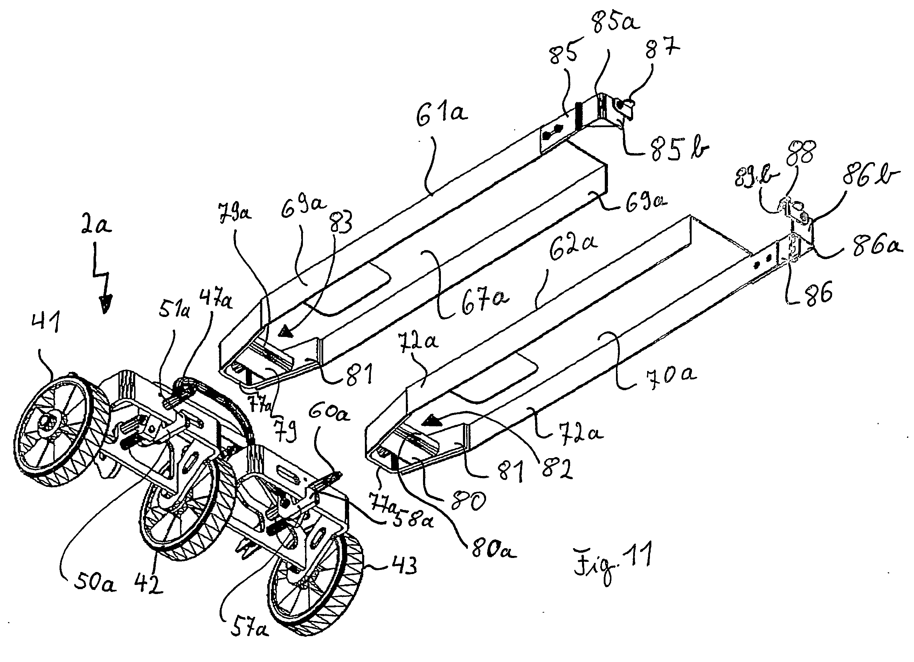

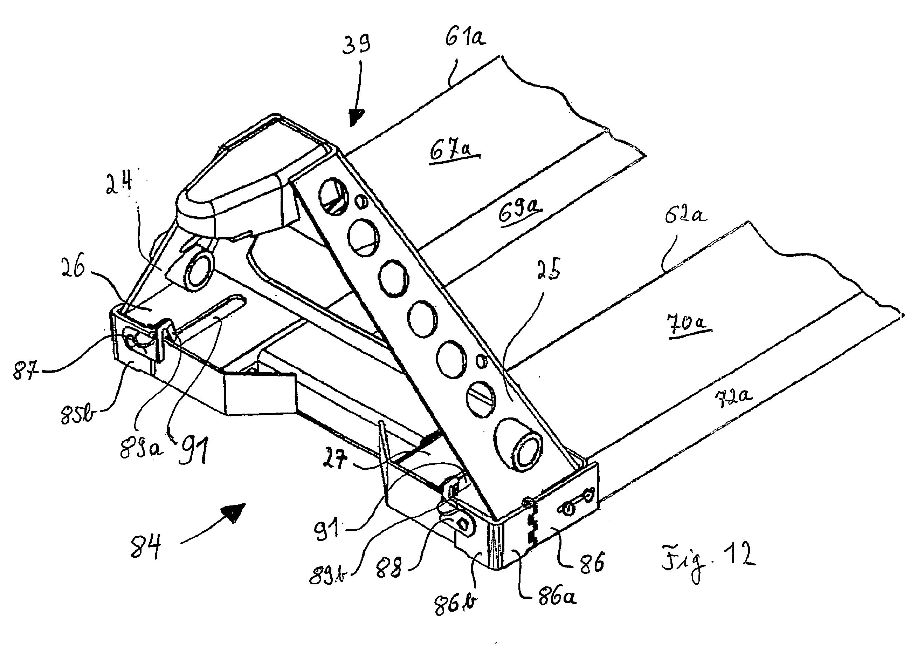

Ein alternatives Ausführungsbeispiel einer Gabelhubwagenausstattung ist aus der Fig. 11 ersichtlich. Die Fig. 11 zeigt zwei Übergreifschuhe oder schuhartige Übergreifschienen 61 a, 62a mit zugehörigem Radsatz 2a in perspektivischer Sicht von schräg unten. Der Radsatz 2a ist im Wesentlichen identisch zum Radsatz 2 aufgebaut und weist neben drei Laufrädern 41, 42, 43 zwei Kupplungsbolzen 47a und 60a sowie zwei Klinken 50a und 57a mit jeweils einer Nase 51 a und 58a auf. Die Übergreifschienen 61 a, 62a sind auf ihrer Unterseite im Wesentlichen offen und weisen unterseitig an ihrem jeweiligen vorderen Ende einen Querbalken 79, 80 auf, der in einem der üblichen Höhe/Stärke der vorderen Enden/Endbereiche 64 von standardmäßigen Gabelhubwagen entsprechenden Abstand zur Unterseite der Oberseitenflächen 67a, 70a angeordnet und mittels Verstärkungsblechen 81 an den Seitenrandflächen 69a, 72a befestigt sind. In diesem Bereich 82, 83 werden die vorderen Endbereiche bzw. Tragbalkenenden 64 eingeführt bzw. greifen diese ein, wenn die Übergreifschiene 61 a, 62a auf die Tragbalken 26, 27 aufgeschoben wird bzw. aufgeschoben worden ist. In dieser aufgeschobenen Position durchdringen dann bei an den Übergreifschienen 61a, 62a angebrachtem Radsatz 2a die Kupplungsbolzen 47a, 60a die Kupplungsbohrungen 65a, 66a und hintergreifen bzw. erfassen die Nasen 51a, 58a die Anschlagsflächen 79a, 80a der Querbalken 79, 80. Hierdurch ist der Radsatz 2a dann an den Übergreifschienen 61a, 62a sicher arretiert und befestigt.

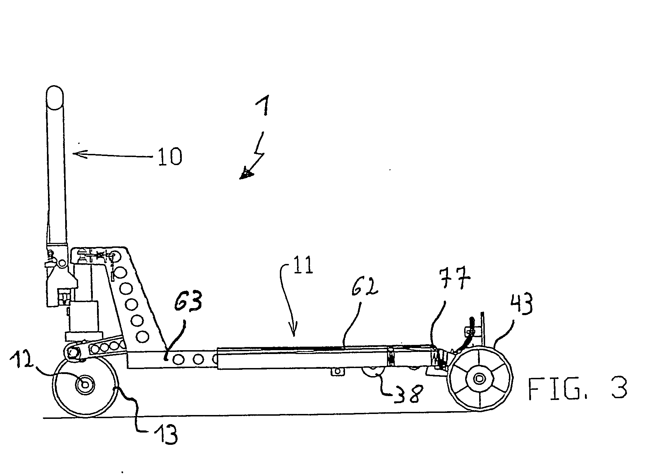

Die Übergreifschienen 61 a, 62a ihrerseits weisen zur Befestigung im Bereich 84 (Figuren 1 und 12) hinter dem Haltegestell 39 in Höhe der Tragbalken 26, 27 jeweils ein Befestigungsscharnier 85, 86 mit einem Schwenkhebel 87, 88 auf, das jeweils an der gabelhubwagenaußenseitigen Seitenrandfläche 69a, 70a an der dem vorderen Ende 77a abgewandten Seite angeordnet ist. In der aus der Fig. 12 ersichtlichen, auf die Tragbalken 26, 27 aufgeschobenen Position reichen die Oberseitenflächen 67a und 70a bis an die Vorderseite der Schrägbalken 24, 25 des Haltegestells 39 heran. Die Schwenkteile 85a, 86a lassen sich dann im Bereich 84 hinter die hinteren Enden der Tragbalken 26, 27 verschwenken, so dass die Scharnierteile 85b und 86b in Anlage mit den Tragbalkenenden im Bereich 84 gelangen. Zur weiteren Befestigung werden dann die Schwenkhebel 87, 88 von oben in die in den Figuren 11 und 12 dargestellte Position verschwenkt und greifen dann jeweils mit Nasen 89a, 89b von oben in Öffnungen 90, 91 des Gestells 39 unterhalb der Schrägbalken 24, 25 ein. Damit sind die Übergreifschienen 61 a, 62a dann verrutschsicher auf den Tragbalken 26, 27 an dem Gabelhubwagen 1 befestigt. Die Übergreifschienen 61 a, 62a weisen bei diesem Ausführungsbeispiel in etwa die Länge der Tragbalken 26, 27 auf.

### Bezugszeichenliste

- 1: Gabelhubwagen
- 2, 2a: Radsatz
- 10: rückwärtiger Teil
- 11: vorderer Teil
- 12: Achse
- 13, 14: Lenkräder
- 15: Stütze
- 16: Konsole
- 17: Pumpengehäuse
- 18: Kolbenstange
- 19: Schwenkgelenk
- 20: Lenk- und Hubstange
- 21: Griff
- 22: Rückstellfeder
- 23: oberer Teil
- 24, 25: Schrägbalken
- 26, 27: Tragbalken
- 28, 29: Gelenk
- 30, 31: Kniehebel
- 32: Hebelstange
- 33: Gelenk
- 34: Hebelarm
- 35: Gelenk
- 36: Fahrstange
- 37: Hebelarm
- 38: Laufrolle
- 39: Haltegestell
- 40: Achse
- 41: Laufrad
- 42: Laufrad
- 43: Laufrad
- 44: Halteplatte
- 45: Bügel
- 46: Bohrung
- 47, 47a: Kupplungsbolzen
- 48: Winkelblech
- 49: Feder
- 50, 50a: Klinke
- 51, 51 a: Nase
- 52: Gabelende
- 53: Gabelende
- 54: Schlitz
- 55: Entriegelungsbügel
- 56: Handgriff
- 57, 57a: Klinke
- 58, 58a: Nase
- 59: Bügel
- 60,60a: Kupplungsbolzen
- 61, 61 a: Übergreifschiene
- 62,62a: Übergreifschiene
- 63: Gabelträgergestell
- 64: Tragbalkenende
- 65, 65a,:
- 66,66a: Kupplungsbohrung
- 67, 67a,:
- 70,70a: Oberseitenfläche
- 68, 71: Unterseitenfläche
- 69, 69a,:
- 72, 72a: Seitenrandfläche
- 73, 74: Öffnung
- 75: Achse
- 76: Lasche
- 77: Ende der Übergreifschienen
- 78: Lochmuster
- 79,80: Querbalken
- 79a, 80a: Anschlagsflächen
- 81: Verstärkungsblech
- 82, 83: Bereich
- 84: Bereich
- 85, 86: Befestigungsscharnier
- 85a, 86a: Schwenkteil
- 85b, 86b: Scharnierteil
- 87,88: Schwenkhebel
- 89a, 89b: Nase
- 90,91: Öffnungen

## Patentansprüche

1. Gabelhubwagen (1) umfassend zwei auf einer Achse (12) gelagerte Lenkräder (13, 14) mit daran angeordneter Hub- und Lenkeinrichtung und ein auf Laufrollen (38) gelagertes Gabelträgergestell (63) mit zwei Tragbalken (26, 27), das mit der Hub- und Lenkeinrichtung in Wirkverbindung stehend gelagert ist, und einen im Bereich der vorderen Gabelenden (64) der Tragbalken (26, 27) an dem Gabelträgergestell (63) anordenbaren Radsatz (2, 2a),
**dadurch gekennzeichnet,**
**dass** der Gabelhubwagen (1) auf die Tragbalken (26, 27) aufgeschobene und an dem Gabelträgergestell (63) lösbar befestigte, die Tragbalken (26, 27) verlängernde Übergreifschienen (61, 62; 61 a, 62a) aufweist, an welchen stirnseitig der Radsatz (2, 2a) lösbar anordenbar ist.

2. Gabelhubwagen nach Anspruch 1, **dadurch gekennzeichnet, dass** die Übergreifschienen (61, 62; 61 a, 62a) stirnseitige Öffnungen (65, 66; 65a, 66a) und unterseitige Öffnungen (73, 74) oder Anschlagsflächen (79a, 80a) aufweisen, die mit Arretierungsmitteln (47, 60; 51, 58; 47a, 60a; 51 a, 58a) des Radsatzes (2, 2a) lösbar in Verbindung bringbar sind.

3. Gabelhubwagen nach Anspruch 1 oder 2, **dadurch gekennzeichnet, dass** die Übergreifschienen (61, 62; 61 a, 62a) an ihren vorderen Enden (77) jeweils eine mit einem Kupplungsbolzen (47, 60; 47a, 60a) des Radsatzes (2, 2a) in Eingriff bringbare Kupplungsbohrung (65, 66; 65a, 66a) aufweisen.

4. Gabelhubwagen nach einem der vorhergehenden Ansprüche, **dadurch gekennzeichnet, dass** die Übergreifschienen (61, 62) vorne an der Unterseite jeweils eine mit einer Klinkennase (51, 58) des Radsatzes (2) in Eingriff bringbare Eingriffsöffnung (73, 74) aufweisen.

5. Gabelhubwagen nach einem der vorhergehenden Ansprüche, **dadurch gekennzeichnet, dass** die Übergreifschienen (61 a, 62a) vorne an der Unterseite jeweils eine mit einer Klinkennase (51 a, 58a) des Radsatzes (2a) in Anschlag bringbare Anschlagsfläche (79a, 80a) aufweisen.

6. Gabelhubwagen nach einem der vorhergehenden Ansprüche, **dadurch gekennzeichnet, dass** die Übergreifschienen (61 a, 62a) in etwa die Länge der Tragbalken (26, 27) aufweisen.

7. Gabelhubwagen nach Anspruch 6, **dadurch gekennzeichnet, dass** die Tragbalken (26, 27) in ihrem rückwärtigen Bereich je einen L-förmigen Träger aufweisen.

8. Gabelhubwagen nach einem der Ansprüche 1 bis 5, **dadurch gekennzeichnet, dass** die Übergreifschienen (61, 62) etwa die halbe Länge der Tragbalken (26, 27) aufweisen.

9. Gabelhubwagen nach einem der vorhergehenden Ansprüche, **dadurch gekennzeichnet, dass** er zwei symmetrisch zur Mittelfläche zwischen den Tragbalken (26, 27) ausgebildete Übergreifschienen (61, 62; 61a, 62a) aufweist, die von vorn über die vorderen Bereiche zweier Tragbalken (26, 27) geschoben und auf diesen gegen unbeabsichtigtes Verschieben gesichert sind.

10. Gabelhubwagen nach einem der vorhergehenden Ansprüche, **dadurch gekennzeichnet, dass** der Radsatz (2, 2a) auf einer Achse (40) drehbeweglich angeordnete Laufräder (41, 42, 43) mit einem dem Durchmesser der Lenkräder (13, 14) entsprechenden Durchmesser aufweist.

11. Gabelhubwagen nach Anspruch 10, **dadurch gekennzeichnet, dass** der Radsatz (2, 2a) zwei Kupplungsbolzen (47, 60; 47a, 60a) mit einem dem Abstand der Mittelachsen der Tragbalken (26, 27) entsprechenden Abstand aufweist, welche Kupplungsbolzen (47, 60; 47a, 60a) mit den vorderen Enden (77) der Übergreifschienen (61, 62; 61 a, 62a) lösbar zu kuppeln sind.

12. Gabelhubwagen nach einem der vorhergehenden Ansprüche, **dadurch gekennzeichnet, dass** der Radsatz (2, 2a) eine Achse (40) aufweist, auf welcher ein zu der Achse (40) parallel verlaufendes und auf der Achse (40) drehbar angeordnetes Gestell angeordnet ist, welches eine Halteplatte (44) und zwei in Längsrichtung der Achse (40) voneinander distanzierte Bügel (45, 59) mit Abstand von der Halteplatte (44) aufweist, wobei jeder Bügel (45, 59) einen fest angeordneten Kupplungsbolzen (47, 60; 47a, 60a) aufweist, mit dem der Radsatz (2, 2a) an den vorderen Enden (77) der Übergreifschienen (61, 62; 61 a; 62a) lösbar ankuppelbar ist.

13. Gabelhubwagen nach Anspruch 12, **dadurch gekennzeichnet, dass** an der Halteplatte (44) ein rückwärtiger Teil der jeweils eine Nase (51, 58; 51a, 58a) aufweisenden Klinken (50, 57; 50a, 57a) federbelastet gelagert ist.

14. Gabelhubwagen nach einem der vorhergehenden Ansprüche, **dadurch gekennzeichnet, dass** auf der Achse (40) des Radsatzes (2, 2a) drei Laufräder (41, 42, 43) angeordnet sind.

15. Gabelhubwagen nach einem der vorhergehenden Ansprüche, **dadurch gekennzeichnet, dass** im Bereich des vorderen Endes (64) der Tragbalken (26, 27) je eine Laufrolle (38) angeordnet ist, die jeweils mittels eines Gestänges (32, 36) bewegbar schwenkbeweglich gelagert ist.

16. Gabelhubwagen nach einem der vorhergehenden Ansprüche, **dadurch gekennzeichnet, dass** er eine auf der Achse (12) zweier Lenkräder (13, 14) gelagerte Hubeinrichtung und ein auf zwei Laufrollen (38) gelagertes Gabelträgergestell (63) mit zwei Tragbalken (26, 27) aufweist, welches mit der Hub- und Lenkeinrichtung beweglich verbunden ist, wobei die Hubeinrichtung eine Hubpumpe aufweist, die auf einer Konsole (16) angeordnet ist, welche auf einer auf der Achse (12) zwischen den beiden Lenkrädern (13, 14) gelagerten Stütze (15) angeordnet ist, und wobei an der Hubpumpe eine Lenk- und Hubstange (20) angeordnet ist und die Hubpumpe eine Kolbenstange (18) aufweist, deren Kopf aus dem Pumpengehäuse (17) der Hubpumpe nach oben herausragt, und wobei am vorderen Ende (64) der beiden Tragbalken (26, 27) je eine Laufrolle (38) angeordnet ist und die Tragbalken (26, 27) am hinteren Ende über einen Querbalken miteinander verbunden sind sowie am hinteren Ende der Tragbalken (26, 27) ein Haltegestell (39) mit einer Gelenkpfanne vorgesehen ist, die auf dem Kopf der Kolbenstange (18) gelenkig gelagert ist und wobei an beiden Seiten der Konsole (16) je ein zweiarmiges Gestänge (32, 36) angeordnet ist, dessen rückwärtige Arme (32) mit der Konsole und dessen vordere Stangen (36) mit der zugehörigen Laufrolle (38) jeweils schwenkbeweglich verbunden sind.

17. Gabelhubwagenausstattung **gekennzeichnet durch** auf die Tragbalken (26, 27) eines Gabelträgergestells (63) eines Gabelhubwagens (1) aufschiebbare und an dem Gabelträgergestell (63) lösbar befestigbare Übergreifschienen (61, 62; 61 a, 62a), die in ihrer auf die Tragbalken (26, 27) aufgeschobenen Position die Tragbalken (26, 27) verlängern, und einen stirnseitig an zwei Übergreifschienen (61, 62; 61 a, 62a) in deren auf die Tragbalken (26, 27) aufgeschobener Position lösbar befestigbarer Radsatz (2, 2a).

18. Gabelhubwagenausstattung nach Anspruch 17, **dadurch gekennzeichnet, dass** die Übergreifschienen (61, 62; 61a, 62a) stirnseitige Öffnungen (65, 66; 65a, 66a) und unterseitige Öffnungen (73, 74) oder Anschlagsflächen (79a, 80a) aufweisen, die mit Arretierungsmitteln (47, 60; 51, 58; 47a, 60a; 51a, 58a) des Radsatzes (2, 2a) lösbar in Verbindung bringbar sind.

19. Gabelhubwagenausstattung nach Anspruch 17 oder 18, **dadurch gekennzeichnet, dass** die Übergreifschienen (61, 62; 61a, 62a) an ihren vorderen Enden (77) jeweils eine mit einem Kupplungsbolzen (47, 60; 47a, 60a) des Radsatzes (2, 2a) in Eingriff bringbare Kupplungsbohrung (65, 66; 65a, 66a) aufweisen.

20. Gabelhubwagenausstattung nach einem der Ansprüche 17 bis 19, **dadurch gekennzeichnet, dass** die Übergreifschienen (61, 62; 61a, 62a) vorne an der Unterseite jeweils eine mit einer Klinkennase (51, 58) des Radsatzes (2) in Eingriff bringbare Eingriffsöffnung (73, 74) aufweisen.

21. Gabelhubwagenausstattung nach einem der vorhergehenden Ansprüche, **dadurch gekennzeichnet, dass** die Übergreifschienen (61 a, 62a) vorne an der Unterseite jeweils eine mit einer Klinkennase (51 a, 58a) des Radsatzes (2a) in Anschlag bringbare Anschlagsfläche (79a, 80a) aufweisen.

22. Gabelhubwagenausstattung nach einem der Ansprüche 17 bis 21, **dadurch gekennzeichnet, dass** die Übergreifschienen (61 a, 62a) in etwa die Länge der Tragbalken (26, 27) aufweisen.

23. Gabelhubwagenausstattung nach einem der Ansprüche 17 bis 22, **dadurch gekennzeichnet, dass** die Übergreifschienen (61, 62) etwa die halbe Länge der Tragbalken (26, 27) aufweisen.

24. Gabelhubwagenausstattung nach einem der Ansprüche 17 bis 23, **dadurch gekennzeichnet, dass** die Übergreifschienen (61, 62; 61 a, 62a) von vorne auf die Tragbalken (26, 27) aufschiebbar sind.

25. Gabelhubwagenausstattung nach einem der Ansprüche 17 bis 24, **dadurch gekennzeichnet, dass** der Radsatz (2, 2a) auf einer Achse (40) drehbeweglich angeordnete Laufräder (41, 42, 43) mit einem dem Durchmesser der Lenkräder (13, 14) entsprechenden Durchmesser aufweist.

26. Gabelhubwagenausstattung nach einem der Ansprüche 17 bis 25, **dadurch gekennzeichnet, dass** der Radsatz (2, 2a) zwei Kupplungsbolzen (47, 60; 47a, 60a) mit einem dem Abstand der Mittelachsen der Tragbalken (26, 27) entsprechenden Abstand aufweist, welche Kupplungsbolzen (47, 60; 47a, 60a) mit den vorderen Enden (77) der Übergreifschienen (61, 62; 61 a, 62a) lösbar zu kuppeln sind.

27. Gabelhubwagenausstattung nach einem der Ansprüche 17 bis 26, **dadurch gekennzeichnet, dass** der Radsatz (2, 2a) eine Achse (40) aufweist, auf welcher ein zu der Achse (40) parallel verlaufendes und auf der Achse (40) drehbar angeordnetes Gestell angeordnet ist, welches eine Halteplatte (44) und zwei in Längsrichtung der Achse (40) voneinander distanzierte Bügel (45, 59) mit Abstand von der Halteplatte (44) aufweist, wobei jeder Bügel (45, 59) einen fest angeordneten Kupplungsbolzen (47, 60; 47a, 60a) aufweist, mit dem der Radsatz (2, 2a) an den vorderen Enden (77) der Übergreifschienen (61, 62; 61a, 62a) lösbar ankuppelbar ist.

28. Gabelhubwagenausstattung nach Anspruch 27, **dadurch gekennzeichnet, dass** an der Halteplatte (44) ein rückwärtiger Teil der jeweils eine Nase (51, 58; 51 a, 58a) aufweisenden Klinken (50, 57; 50a, 57a) federbelastet gelagert ist.

29. Gabelhubwagenausstattung nach einem der Ansprüche 17 bis 28, **dadurch gekennzeichnet, dass** auf der Achse (40) des Radsatzes (2, 2a) drei Laufräder (41, 42, 43) angeordnet sind.

## Claims

1. Forklift truck (1) comprising two steering wheels (13, 14) mounted on one axle (12), having a lifting and steering device arranged thereon, and comprising a fork carrier frame (63) mounted on running rollers (38), having two supporting beams (26, 27), which is mounted in such a manner that it stands in interaction with the lifting and steering device, and comprising a wheel set (2, 2a) that can be disposed on the fork carrier frame (63), in the region of the front fork ends (64) of the supporting beams (26, 27),
**characterized in that**
the forklift truck (1) has overlapping rails (61, 62; 61a, 62a) that extend the supporting beams (26, 27), which are pushed onto the supporting beams (26, 27) and are releasably attached to the fork carrier frame (63), on the face of which rails the wheel set (2, 2a) can be releasably disposed.

2. Forklift truck according to claim 1, **characterized in that** the overlapping rails (61, 62; 61a, 62a) have face openings (65, 66; 65a, 66a) and underside openings (73, 74) or contact surfaces (79a, 80a) that can be releasably brought into connection with locking means (47, 60; 51, 58; 47a, 60a; 51a, 58a) of the wheel set (2, 2a).

3. Forklift truck according to claim 1 or 2, **characterized in that** the overlapping rails (61, 62; 61a, 62a) have a coupling bore (65, 66; 65a, 66a) that can be brought into engagement with a coupling bolt (47, 60; 47a, 60a) of the wheel set (2, 2a), in each instance, at their front ends (77).

4. Forklift truck according to one of the preceding claims, **characterized in that** the overlapping rails (61, 62) have an engagement opening (73, 74) that can be brought into engagement with a catch nose (51, 58) of the wheel set (2), in each instance, at the front, on the underside.

5. Forklift truck according to one of the preceding claims, **characterized in that** the overlapping rails (61a, 62a) have a contact surface (79a, 80a) that can be brought into contact with a catch nose (51a, 58a) of the wheel set (2a), in each instance, at the front, on the underside.

6. Forklift truck according to one of the preceding claims, **characterized in that** the overlapping rails (61a, 62a) have approximately the length of the supporting beams (26, 27).

7. Forklift truck according to claim 6, **characterized in that** the supporting beams (26, 27) have an L-shaped carrier in their rear region.

8. Forklift truck according to one of claims 1 to 5, **characterized in that** the overlapping rails (61, 62) have about half the length of the supporting beams (26, 27).

9. Forklift truck according to one of the preceding claims, **characterized in that** it has two overlapping rails (61, 62; 61a, 62a) configured symmetrically to the center area between the supporting beams (26, 27), which are pushed onto the front regions of two supporting beams (26, 27) from the front, and are secured on the latter to prevent unintentional displacement.

10. Forklift truck according to one of the preceding claims, **characterized in that** the wheel set (2, 2a) has running wheels (41, 42, 43) having a diameter that corresponds to the diameter of the steering wheels (13, 14), disposed on an axle (40) so as to rotate.

11. Forklift truck according to claim 10, **characterized in that** the wheel set (2, 2a) has two coupling bolts (47, 60; 47a, 60a) having a distance between them that corresponds to the distance between the center axes of the supporting beams (26, 27), which coupling bolts (47, 60; 47a, 60a) can be releasably coupled with the front ends (77) of the overlapping rails (61, 62; 61a, 62a).

12. Forklift truck according to one of the preceding claims, **characterized in that** the wheel set (2, 2a) has an axle (40) on which a frame that runs parallel to the axle (40) and is disposed to rotate on the axle (40) is disposed, which has a holder plate (44) and two stirrups (45, 59) spaced apart from one another in the longitudinal direction of the axle (40), at a distance from the holder plate (44), whereby each stirrup (45, 59) has a coupling bolt (47, 60; 47a, 60a) that is disposed in fixed manner, with which the wheel set (2, 2a) can be releasably coupled to the front ends (77) of the overlapping rails (61, 62; 61a, 62a).

13. Forklift truck according to claim 12, **characterized in that** a rear part of the catches (50, 57; 50a, 57a) that have a nose (51, 58; 51a, 58a), in each instance, is mounted on the holder plate (44) under spring force.

14. Forklift truck according to one of the preceding claims, **characterized in that** three running wheels (41, 42, 43) are disposed on the axle (40) of the wheel set (2, 2a).

15. Forklift truck according to one of the preceding claims, **characterized in that** a running roller (38) is disposed in the region of the front end (64) of the supporting beams (26, 27), in each instance, which is mounted to be movable to pivot by means of a rod mechanism (32, 36), in each instance.

16. Forklift truck according to one of the preceding claims, **characterized in that** it has a lifting device mounted on the axle (12) of two steering wheels (13, 14), and a fork carrier frame (63) mounted on two running rollers (38), having two supporting beams (26, 27), which frame is connected with the lifting and steering device in movable manner, whereby the lifting device has a lifting pump that is disposed on a console (16), which is disposed on a support (15) mounted on the axle (12) between the two steering wheels (13, 14), and whereby a steering and lifting rod (20) is disposed on the lifting pump, and the lifting pump has a piston rod (18) whose head projects upward out of the pump housing (17) of the lifting pump, and whereby a running roller (38) is disposed on the front end (64) of the two supporting beams (26, 27), in each instance, and the supporting beams (26, 27) are connected with one another at the rear end, by way of a cross-beam, and a holder frame (39) having a joint pan is provided at the rear end of the supporting beams (26, 27), which pan is mounted on the head of the piston rod (18), in articulated manner, and whereby a two-arm rod mechanism (32, 36) is disposed on both sides of the console (16), in each instance, the rear arms (32) of which are connected with the console, and the front rods (36) of which are connected with the related running roller (38), so as to pivot, in each instance.

17. Forklift truck kit, **characterized by** overlapping rails (61, 62; 61a, 62a) that can be pushed onto the supporting beams (26, 27) of a fork carrier frame (63) of a forklift truck (1), and releasably attached to the fork carrier frame (63), which extend the supporting beams (26, 27) in their position in which they are pushed onto the supporting beams (26, 27), and by a wheel set (2, 2a) that can be releasably attached to the face of two overlapping rails (61, 62; 61a, 62a) in their position in which they are pushed onto the supporting beams (26, 27).

18. Forklift truck kit according to claim 17, **characterized in that** the overlapping rails (61, 62; 61a, 62a) have face openings (65, 66; 65a, 66a) and underside openings (73, 74) or contact surfaces (79a, 80a) that can be releasably brought into connection with locking means (47, 60; 51, 58; 47a, 60a; 51a, 58a) of the wheel set (2, 2a).

19. Forklift truck kit according to claim 17 or 18, **characterized in that** the overlapping rails (61, 62; 61a, 62a) have a coupling bore (65, 66; 65a, 66a) that can be brought into engagement with a coupling bolt (47, 60; 47a, 60a) of the wheel set (2, 2a), in each instance, at their front ends (77).

20. Forklift truck kit according to one of claims 17 to 19, **characterized in that** the overlapping rails (61, 62, 61a, 62a) have an engagement opening (73, 74) that can be brought into engagement with a catch nose (51, 58) of the wheel set (2), in each instance, at the front, on the underside.

21. Forklift truck kit according to one of the preceding claims, **characterized in that** the overlapping rails (61a, 62a) have a contact surface (79a, 80a) that can be brought into contact with a catch nose (51a, 58a) of the wheel set (2a), in each instance, at the front, on the underside.

22. Forklift truck kit according to one of claims 17 to 21, **characterized in that** the overlapping rails (61a, 62a) have approximately the length of the supporting beams (26, 27).

23. Forklift truck kit according to one of claims 17 to 22, **characterized in that** the overlapping rails (61, 62) have about half the length of the supporting beams (26, 27).

24. Forklift truck kit according to one of claims 17 to 23, **characterized in that** the overlapping rails (61, 62, 61a, 62a) can be pushed onto the supporting beams (26, 27) from the front.

25. Forklift truck kit according to one of claims 17 to 24, **characterized in that** the wheel set (2, 2a) has running wheels (41, 42, 43) having a diameter that corresponds to the diameter of the steering wheels (13, 14), disposed on an axle (40) so as to rotate.

26. Forklift truck kit according to one of claims 17 to 25, **characterized in that** the wheel set (2, 2a) has two coupling bolts (47, 60; 47a, 60a) having a distance between them that corresponds to the distance between the center axes of the supporting beams (26, 27), which coupling bolts (47, 60; 47a, 60a) can be releasably coupled with the front ends (77) of the overlapping rails (61, 62; 61a, 62a).

27. Forklift truck kit according to one of claims 17 to 26, **characterized in that** the wheel set (2, 2a) has an axle (40) on which a frame that runs parallel to the axle (40) and is disposed to rotate on the axle (40) is disposed, which has a holder plate (44) and two stirrups (45, 59) spaced apart from one another in the longitudinal direction of the axle (40), at a distance from the holder plate (44), whereby each stirrup (45, 59) has a coupling bolt (47, 60; 47a, 60a) that is disposed in fixed manner, with which the wheel set (2, 2a) can be releasably coupled to the front ends (77) of the overlapping rails (61, 62; 61a, 62a).

28. Forklift truck kit according to claim 27, **characterized in that** a rear part of the catches (50, 57; 50a, 57a) that have a nose (51, 58; 51a, 58a), in each instance, is mounted on the holder plate (44) under spring force.

29. Forklift truck kit according to one of claims 17 to 28, **characterized in that** three running wheels (41, 42, 43) are disposed on the axle (40) of the wheel set (2, 2a).

## Revendications

1. Chariot élévateur à fourche (1) comprenant deux roues directrices (13, 14) logées sur un axe (12) et avec un dispositif de direction et de levée disposé dessus, un bâti de porte-fourche (63) pourvu de deux sommiers (26, 27) et logé sur des roulettes (38), lequel est en relation active avec le dispositif de direction et de levée, un essieu monté (2, 2a) pouvant être disposé au niveau des extrémités avant de fourche (64) des sommiers (26, 27) sur le bâti de porte-fourche (63),
**caractérisé**
**en ce que** le chariot élévateur à fourche (1) comprend des rails de chevauchement (61, 62 ; 61a, 62a) prolongeant les sommiers (26, 27), fixés de manière amovible sur le bâti de porte-fourche (63) et glissés sur les sommiers (26, 27), sur lesquels l'essieu monté (2, 2a) peut être disposé de manière amovible sur le coté avant.

2. Chariot élévateur à fourche selon la revendication 1, **caractérisé en ce que** les rails de chevauchement (61, 62 ; 61a, 62a) comprennent des ouvertures sur la face (65, 66 ; 65a, 66a) et des ouvertures situées sur le côté inférieur (73, 74) ou des surfaces de butée (79a, 80a), lesquelles peuvent être mises en contact de manière amovible avec des moyens d'arrêt (47, 60 ; 51, 58 ; 47a, 60a ; 51a, 58a) de l'essieu monté (2, 2a)

3. Chariot élévateur à fourche selon la revendication 1 ou 2, **caractérisé en ce que** les rails de chevauchement (61, 62 ; 61a, 62a) présentent respectivement, sur leurs extrémités avant (77), un trou d'accouplement (65, 66 ; 65a, 66a) pouvant être mis en prise avec une cheville d'accouplement (47, 60 ; 47a, 60a) de l'essieu monté (2, 2a).

4. Chariot élévateur à fourche selon l'une quelconque des revendications précédentes, **caractérisé en ce que** les rails de chevauchement (61, 62) présentent respectivement, à l'avant sur le côté inférieur, une ouverture de prise (73, 74) pouvant être mise en prise avec un nez à cliquet (51, 58) de l'essieu monté (2).

5. Chariot élévateur à fourche selon l'une quelconque des revendications précédentes, **caractérisé en ce que** les rails de chevauchement (61a, 62a) présentent respectivement, à l'avant sur le côté inférieur, une surface de butée (79a, 80a) pouvant être mise en prise avec un nez à cliquet (51a, 58a) de l'essieu monté (2).

6. Chariot élévateur à fourche selon l'une quelconque des revendications précédentes, **caractérisé en ce que** les rails de chevauchement (61a, 62a) présentent approximativement la longueur des sommiers (26, 27).

7. Chariot élévateur à fourche selon la revendication 6, **caractérisé en ce que** les sommiers (26, 27) présentent respectivement, à l'arrière, un support en forme de L.

8. Chariot élévateur à fourche selon l'une quelconque des revendications 1 à 5, **caractérisé en ce que** les rails de chevauchement (61, 62) présentent approximativement la moitié de la longueur des sommiers (26, 27).

9. Chariot élévateur à fourche selon l'une quelconque des revendications précédentes, **caractérisé en ce qu'**il présente deux rails de chevauchement (61, 62 ; 61a, 62a) formés symétriquement par rapport à la surface médiane entre les sommiers (26, 27), lesquels sont glissés de l'avant au-dessus de l'avant de deux sommiers (26, 27) et, placés sur ces derniers, sont à l'abri d'un déplacement involontaire.

10. Chariot élévateur à fourche selon l'une quelconque des revendications précédentes, **caractérisé en ce que** l'essieu monté (2, 2a) présente des roues (41, 42, 43) agencées sur un axe (40) de manière rotative, avec un diamètre correspondant au diamètre des roues directrices (13, 14).

11. Chariot élévateur à fourche selon la revendication 10, **caractérisé en ce que** l'essieu monté (2, 2a) présente deux chevilles d'accouplement (47, 60 ; 47a, 60a) avec un intervalle correspondant à l'intervalle des axes médians des sommiers (26, 27), lesquelles chevilles d'accouplement (47, 60 ; 47a, 60a) sont à coupler de manière amovible avec les extrémités avant (77) des rails de chevauchement (61, 62; 61 a, 62a).

12. Chariot élévateur à fourche selon l'une quelconque des revendications précédentes, **caractérisé en ce que** l'essieu monté (2, 2a) présente un axe (40), sur lequel est disposé un bâti qui s'étend parallèlement à l'axe (40) et qui est disposé de manière à pouvoir tourner sur l'axe (40), lequel présente un plaque de maintien (44) et deux arceaux (45, 59) écartés l'un de l'autre dans la direction longitudinale de l'axe (40), à un intervalle de la plaque de maintien (44), chaque arceau (45, 59) présentant une cheville d'accouplement (47, 60 ; 47a, 60a) fixée fermement, avec lequel l'essieu monté (2, 2a) peut être attelé de manière amovible aux extrémités avant (77) des rails de chevauchement (61, 62; 61 a, 62a).

13. Chariot élévateur à fourche selon la revendication 12, **caractérisé en ce qu'**une partie arrière des cliquets (50, 57 ; 50a, 57a) comprenant respectivement un nez (51, 58 ; 51a, 58a) est logée sous l'action d'un ressort sur la plaque de maintien (44).

14. Chariot élévateur à fourche selon l'une quelconque des revendications précédentes, **caractérisé en ce que** trois roues (41, 42, 43) sont disposées sur l'axe (40) de l'essieu monté (2, 2a).

15. Chariot élévateur à fourche selon l'une quelconque des revendications précédentes, **caractérisé en ce qu'**un galet de roulement (38) est installé à l'avant (64) des sommiers (26, 27), lequel est logé à l'aide d'une tige (32, 36) de manière à pouvoir pivoter.

16. Chariot élévateur à fourche selon l'une quelconque des revendications précédentes, **caractérisé en ce qu'**il présente un dispositif de levée installé sur l'axe (12) des deux roues directrices (13, 14) et un bâti de porte-fourche (63) avec deux sommiers (26, 27) logé sur deux galets de roulement (38), lequel est relié au dispositif de direction et de levée de manière mobile, le dispositif de levée présentant une pompe de levée, laquelle est disposée sur une console (16), laquelle est disposée sur un support (15) logé sur l'axe (12) entre les deux roues directrices (13, 14), et une tige de direction et de levée (20) étant disposée sur la pompe de levée et la pompe de levée présentant un tige de piston (18), dont la tête fait saillie vers le haut à partir du boîtier de pompe (17) de la pompe de levée, et un galet de roulement (38) étant disposé sur l'extrémité avant (64) des deux sommiers (26, 27), les sommiers (26, 27) étant reliés entre eux au niveau de leur extrémité arrière par une poutre transversale et un bâti de support (39) pourvu d'un coussinet à rotule étant prévu au niveau de l'extrémité arrière des sommiers (26, 27), lequel coussinet à rotule est logé de manière articulée sur la tête de la tige de piston (18) et une tige (32, 36) à deux bras étant disposée sur les deux côtés de la console (16), dont les bras arrières (32) sont reliés de manière à pouvoir pivoter avec la console et dont les tiges avant (36) sont reliées de manière à pouvoir pivoter avec le galet de roulement correspondant (38).

17. Equipement de chariot élévateur à fourche, **caractérisé par** des rails de chevauchement (61, 62 ; 61a, 62a) pouvant être glissés sur les sommiers (26, 27) d'un bâti de porte-fourche (63) d'un chariot élévateur à fourche (1) et pouvant être fixés de manière amovible sur le bâti de porte-fourche (63), lesquels prolongent les sommiers (26, 27) dans leur position glissée sur les sommiers (26, 27), et par un essieu monté (2, 2a) pouvant être fixé de manière amovible sur son côté avant sur deux rails de chevauchement (61, 62 ; 61a, 62a) dans leur position glissée sur les sommiers (26, 27).

18. Equipement de chariot élévateur à fourche selon la revendication 17, **caractérisé en ce que** les rails de chevauchement (61, 62 ; 61a, 62a) présentent des ouvertures sur le côté avant (65, 66 ; 65a, 66a) et des ouvertures inférieures (73, 74) ou des surfaces de butée (79a, 80a), lesquelles peuvent être amenées à être reliées de manière amovible avec des moyens d'arrêt (47, 60 ; 51, 58 ; 47a, 60a ; 51a, 58a) de l'essieu monté (2, 2a).

19. Equipement de chariot élévateur à fourche selon la revendication 17 ou 18, **caractérisé en ce que** les rails de chevauchement (61, 62 ; 61a, 62a) présentent respectivement, à leurs extrémités avant, un trou d'accouplement (65, 66 ; 65a, 66a) pouvant être mis en prise avec une cheville d'accouplement (47, 60 ; 47a, 60a) de l'essieu monté (2, 2a).

20. Equipement de chariot élévateur à fourche selon l'une quelconque des revendications 17 à 19, **caractérisé en ce que** les rails de chevauchement (61, 62 ; 61a, 62a) présentent, à l'avant sur le côté inférieur, une ouverture de prise (73, 74) pouvant être mise en prise avec un nez à cliquet (51, 58) de l'essieu monté (2).

21. Equipement de chariot élévateur à fourche selon l'une quelconque des revendications précédentes, **caractérisé en ce que** les rails de chevauchement (61 a, 62a) présentent respectivement, à l'avant sur le côté inférieur, une surface de butée (79a, 80a) pouvant être mise en prise avec un nez à cliquet (51a, 58a) de l'essieu monté (2a).

22. Equipement de chariot élévateur à fourche selon l'une quelconque des revendications 17 à 21, **caractérisé en ce que** les rails de chevauchement (61a, 62a) présentent approximativement la longueur des sommiers (26, 27).

23. Equipement de chariot élévateur à fourche selon l'une quelconque des revendications 17 à 22, **caractérisé en ce que** les rails de chevauchement (61, 62) présentent approximativement la moitié de la longueur des sommiers (26, 27).

24. Equipement de chariot élévateur à fourche selon l'une quelconque des revendications 17 à 23, **caractérisé en ce que** les rails de chevauchement (61, 62 ; 61 a, 62a) peuvent être glissés à partir de l'avant sur les sommiers (26, 27).

25. Equipement de chariot élévateur à fourche selon l'une quelconque des revendications 17 à 24, **caractérisé en ce que** l'essieu monté (2, 2a) présente des roues (41, 42, 43) disposées sur un axe (40) de manière rotative, avec un diamètre correspondant au diamètre des roue directrices (13, 14).

26. Equipement de chariot élévateur à fourche selon l'une quelconque des revendications 17 à 25, **caractérisé en ce que** l'essieu monté (2, 2a) présente deux chevilles d'accouplement (47, 60 ; 47a, 60a) avec un intervalle correspondant à l'intervalle des axes médians des sommiers (26, 27), lesquelles chevilles d'accouplement (47, 60 ; 47a, 60a) sont à coupler de manière amovible avec les extrémités avant (77) des rails de chevauchement (61, 62; 61a, 62a).

27. Equipement de chariot élévateur à fourche selon l'une quelconque des revendications 17 à 26, **caractérisé en ce que** l'essieu monté (2, 2a) présente un axe (40), sur lequel est disposé un bâti qui s'étend parallèlement à l'axe (40) et qui est disposé de manière rotative sur l'axe (40), lequel bâti présente une plaque de maintien (44) et deux arceaux (45, 59) écartés l'un de l'autre dans une direction longitudinale par rapport à l'axe (40), à une distance correspondant à la plaque de maintien (44), chaque arceau (45, 59) présentant une cheville d'accouplement (47, 60 ; 47a, 60a) fixée fermement, avec laquelle l'essieu monté (2, 2a) peut être attelé de manière amovible aux extrémités avant (77) des rails de chevauchement (61, 62; 61a, 62a).

28. Equipement de chariot élévateur à fourche selon la revendication 27, **caractérisé en ce qu'**une partie arrière des cliquets (50, 57 ; 50a, 57a) présentant un nez (51, 58 ; 51a, 58a) est logée sous l'action d'un ressort sur la plaque de maintien (44).

29. Equipement de chariot élévateur à fourche selon l'une quelconque des revendications 17 à 28, **caractérisé en ce que** trois roues (41, 42, 43) sont disposées sur l'axe (40) de l'essieu monté (2, 2a).
